Europäisches Patentamt

European Patent Office

Office européen des brevets

(19)

(11) Publication number: 0 193 344
A1

(12) EUROPEAN PATENT APPLICATION

(21) Application number: 86301159.9

(22) Date of filing: 19.02.86

(51) Int. Cl.⁴: A 01 N 59/06
A 01 N 35/02
//(A01N59/06, 35:02, 31:02),
(A01N35/02, 31:02)

(30) Priority: 27.02.85 GB 8505065

(43) Date of publication of application:
03.09.86 Bulletin 86/36

(84) Designated Contracting States:
AT BE CH DE FR GB IT LI LU NL SE

(71) Applicant: S.S. WHITE LIMITED
Bedford House 32/34 Clarendon Road
Harrow Middlesex(GB)

(72) Inventor: Savell, Hugh
21 Eversley Road
Surbiton Surrey(GB)

(72) Inventor: Yule, Charles A.
45 Priory Road
Chessington Surrey(GB)

(74) Representative: Boff, James Charles et al,
c/o Phillips & Leigh 7 Staple Inn Holborn
London WC1V 7QF(GB)

(54) Sterilising solutions.

(57) The invention provides a sterilising composition containing a dialdehyde, particularly glutaraldehyde, as a sporicidal and bactericidal agent. The composition has an acidic pH to maximise shelf life and contains potentiating compounds, particularly magnesium ions, to render the dialdehyde sporicidal at acidic pH.

## STERILISING SOLUTIONS

This invention relates to improved chemical sterilising compositions, and is particularly related to sterilising compositions containing a dialdehyde as a sporicidal and bactericidal agent.

United Kingdom Patent Specifications Nos. 992813 and 992814 disclose sterilising solutions comprising an n-alkane $\alpha$, $\Omega$ dicarboxyaldehyde containing from 3 to 6 carbon atoms; a lower alkanol containing from 1 to 3 carbon atoms; and an alkalinating agent to ensure that the pH of the solution is above 7.4.

It is stated in these Patent Specifications that the pH has to be above 7.4 to obtain effective sterilising action. However at alkaline pH polymerisation of the dicarboxyaldehydes occurs leading to a deterioration of the solutions and loss of sterilising activity.

A widely used chemical sterilising agent is an alkaline buffered 2% glutaraldehyde solution. Such alkaline glutaraldehyde solutions have very effective sporicidal activity at room temperature, however they are not stable and have a short effective life.

Acidic glutaraldehyde solutions have better stability but are not ordinarily sporicidal at room temperature. A compromise between stability and sporicidal activity is given by the currently known commercial compositions which are sold as two-part products, one part being a slightly acidic composition of glutaraldehyde and an alkanol;  the other part being an alkalinating agent such as sodium bicarbonate. For use these parts are mixed and diluted in water to give a 2% glutaraldehyde solution (on a weight to volume basis).   This resulting solution has a limited working life, generally of 2-3 weeks, before polymerisation of the glutaraldehyde makes the solution ineffective.

In some commercial compositions phenol is added to increase low pH sporicidal effectiveness at pH between 7.0 and 7.4 and yet have extra stability.   However use of phenol is undesirable on safety grounds, phenol being:- toxic by skin absorbance, ingestion or inhalation;  not entirely effective against bacterial spores or viruses; and being inactivated by proteinaceous matter.

The applicants have aimed to overcome the above mentioned disadvantages of the prior art.

Accordingly the present invention provides a sterilising composition comprising an n-alkane $\alpha$, $\Omega$ dicarboxyaldehyde containing from 3 to 6 carbon atoms (or an adduct of such a compound) and a lower alkanol containing from one to three carbon atoms characterised in that:-

the pH of the composition is less than 7 (thereby enhancing the shelf life of the composition);

potentiating compounds are included to potentiate the sterilising activity of the n-alkane $\alpha$, $\Omega$ dicarboxyaldehyde at acidic pH; and that

a pH indicator is included to show by colour change when the pH of the composition has risen sufficiently to affect its shelf life and potency.

Advantageously the pH of the solution is buffered and the potentiating compounds comprise a non-ionic surfactant of the polyethoxyethanol group and a source of magnesium ions to act on the cell wall of micro-organisms thereby facilitating penetration by the dicarboxyaldehyde.

An advantage of such sterilising compositions is that they can be produced as a one-part sterilising solution having a shelf life of the order of two years and not requiring preparation for use. The sterilising solution is capable of dilution to a disinfecting concentration to give a disinfectant having a working life time of up to 4 weeks. The working life time of the disinfectant depends critically on both whether the water added is hard or soft, and on the nature of the container the disinfectant is mixed and kept in.

Since the primary cause of deterioration of the sterilising solution or of the made-up disinfectant seems to be base catalysed polymerisation of the dicarboxyaldehyde, the pH indicator shows when deterioration has probably taken place.

The invention is illustrated by way of example in the following description. In the following all terms expressed as a percentage are on a weight per volume basis, i.e. grams of substance in a hundred millilitres of solution.

A suitable formulation comprises the following constituents:

| | |
|---|---|
| Glutaraldehyde | 2.0000% |
| Isopropanol | 2.0000% |
| Magnesium Chloride .6H$_2$0 | 4.0600% |
| Surfactant Triton X-100 (Trade Mark) | 2.0000% |
| Tetrasodium EDTA | 0.2500% |
| Sodium Borate | 0.0300% |
| Boric Acid | 0.4000% |
| Phenol Red | 0.0005% |
| Water | 89.2595% |
| | 100.0000% |

The reasons for inclusion of these constituents are as follows:-

i)  The glutaraldehyde is the main bactericidal agent, the isopropanol having bactericidal properties to augment glutaraldehyde.

ii)  The bactericidal activity of the glutaraldehyde is enhanced by magnesium ions, here provided in the form of magnesium chloride, which break down bacterial cell walls allowing ingress of glutaraldehyde. This process is augmented by the surface wetting effect of Triton X-100, a surfactant of the polyethoxyethanol group. Together the magnesium ions and surfactant potentiate the activity of glutaraldehyde at an otherwise unfavourably acidic pH.

iii) pH controllers. The boric acid and sodium borate form a buffer at a pH of around 6.

iv) The tetrosodium EDTA prevents precipitation of calcium borate from the solution in the event of hard water being added to the solution.

v) The phenol red acts as an indicator to give a distinctive colour change in the range pH 6 to pH 8.5. Any other suitable indicator for the required pH range may be used e.g. litmus, bromothymol blue, naphtholphthalein, cresol red, m-nitrophenol. Phenol red changes colour from yellow to carmine (purple-red) between pH 6.8 to 8.4. The solution would remain potent throughout the orange and red phases.

vi) The boric acid and sodium borate also act as corrosion inhibitors for metals, thereby allowing the sanitising solution to be used freely for surgical or dental instruments.

vii) Finally the Triton X-100 acts as a detergent, the EDTA enhancing the detergency by chelating calcium.

The concentrations quoted above are for example only. In particular the glutaraldehyde concentration of 2% is given since this is the generally accepted level in the known sterilising formulations. Further dilution by 1:2 to 1:10 is possible to give disinfecting solutions, or even by 1:20 to give a weakly disinfecting solution for, e.g. sanitising worktops.

Exemplary, though non-restrictive, ranges of composition for the main components are:

| | |
|---|---|
| Glutaraldehyde | 0.5 to 5.0% |
| Isopropanol | 0.5 to 5.0% |
| Magnesium ions | 0.1 to 2.0% |
| Surfactant | 0.5 to 5.0% |
| Indicator | 0.0001 to 0.01% |

Although the above example only uses glutaraldehyde it will be clear that similar considerations apply to other dialdehydes, or their adducts, such as succinaldehyde.

The effectiveness of the compositions of the invention are shown by the following table of microbial challenge results of full strength, and 1:4 diluted sterilising solutions according to the invention.

| Organism (Challenge per ml) | Time for total kill | |
|---|---|---|
| | Full strength | 1 to 4 |
| B. Stearothermophilus Spores ($3 \times 10^4$) | 8 hr | >24 hr |
| B. Licheniformis Spores ($1.5 \times 10^4$) | 8 hr | >24 hr |
| B. Stearothermophilus Vegetative ($3 \times 10^6$) | 8 hr | 24 hr |
| B. Licheniformis Vegetative ($1.5 \times 10^6$) | 8 hr | >24 hr |
| PS. Aeruginosa ($1 \times 10^6$) | 30 min | 30 min |
| M. Fortuitum (=Tuberculosis) ($1 \times 10^6$) | 30 min | 90 min |
| E. Coli ($5 \times 10^6$) | 10 min | 30 min |
| P. Vulgaris ($3 \times 10^6$) | 10 min | 30 min |
| S. Aureus ($1 \times 10^6$) | 2 min | 10 min |
| C. Albicans ($8 \times 10^5$) | 2 min | >90 min |

In manufacture of the above sterilising solutions the solution is filtered through a microbially retentive filter to eliminate micro-organisms inherent in the non-bactericidal ingredients. This filtration takes place before addition of the glutaraldehyde.

It should not be taken from the above that use of an acidic solution prevents all polymerisation; some has been observed on all the samples made by the applicants. However, it is suspected that what little precipitation is observed is due to the presence of "seeding" impurities in the reagents, or to reaction with the soda glass vessels used in preparation of some of the solutions. It was found that use of borosilicate glass vessels prevented too much formation of precipitate.

CLAIMS

1. A sterilising composition comprising an n-alkane $\alpha$, $\Omega$ dicarboxyaldehyde containing from 3 to 6 carbon atoms (or an adduct of such a compound) and a lower alkanol containing from one to three carbon atoms characterised in that:-

the pH of the composition is less than 7 (thereby enhancing the shelf life of the composition);

potentiating compounds are included to potentiate the sterilising activity of the n-alkane $\alpha$, $\Omega$ dicarboxy-aldehyde at acidic pH; and that

a pH indicator is included to show by colour change when the pH of the composition has risen sufficiently to affect its shelf life and potency.

2. A sterilising composition as claimed in claim 1 in which the dicarboxyaldehyde is glutaraldehyde.

3. A sterilising composition as claimed in claim 1 or claim 2 in which the lower alkanol is isopropanol.

4. A sterilising composition as claimed in any preceding claim in which the potentiating compound comprises a source of magnesium ions.

5. A sterilising composition as claimed in any preceding claim in which the potentiating compound includes a non-ionic surfactant of the polyethoxyethanol group.

6. A sterilising composition as claimed in any preceding claim supplied as a one-part sterilising solution, not requiring dilution or potentiation before use.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A-1 588 649 (GALEN LTD.) * Whole document * | 1-6 | A 01 N 59/06 A 01 N 35/02 //<br>(A 01 N 59/06<br>A 01 N 35:02<br>A 01 N 31:02 |
| X | US-A-4 208 404 (S.M. COWAN) * Column 1, line 44 - column 3, line 9; examples; claims * | 1-3,6 | (A 01 N 35/02<br>A 01 N 31:02 ) |
| A | | 4 | |
| X | US-A-3 968 248 (R.M.G. BOUCHER) <br><br>* Column 2, line 56 - column 3, line 7; column 4, line 66 - column 5, line 5; column 8, lines 12-36; claims * | 1-3,5,6 | |
| D,A | GB-A- 992 813 (ETHICON INC.) * Claims * | 1-3 | **TECHNICAL FIELDS SEARCHED (Int. Cl.4)** |
| A | WO-A-8 401 894 (AMERICAN HOSPITAL SUPPLY CORP.) * Page 4, line 31 - page 5, line 3; page 6, lines 9-31; page 8, line 34 - page 10, line 18; claims 1-10,13-16,18-22,25,30-36 * | 1-3,5,6 | A 01 N |

The present search report has been drawn up for all claims

| Place of search | Date of completion of the search | Examiner |
|---|---|---|
| THE HAGUE | 10-06-1986 | FLETCHER A.S. |